(19) Europäisches Patentamt
European Patent Office
Office européen des brevets

(11) Veröffentlichungsnummer: **0 138 103**
**A2**

(12) # EUROPÄISCHE PATENTANMELDUNG

(21) Anmeldenummer: **84111349.1**

(22) Anmeldetag: **24.09.84**

(51) Int. Cl.⁴: **C 08 L 83/04**

(30) Priorität: **05.10.83 DE 3336135**

(43) Veröffentlichungstag der Anmeldung: **24.04.85 Patentblatt 85/17**

(84) Benannte Vertragsstaaten: **AT BE CH DE GB IT LI NL SE**

(71) Anmelder: **BAYER AG, Konzernverwaltung RP Patentabteilung, D-5090 Leverkusen 1 Bayerwerk (DE)**

(72) Erfinder: **Saykowski, Franz, Dr., Andreas-Gryphius-Strasse 1, D-5000 Koeln 80 (DE)**
Erfinder: **Würminghausen, Thomas, Dr., Christian-Hess-Strasse 65, D-5090 Leverkusen 1 (DE)**
Erfinder: **Sattlegger, Hans, Dr., Auf dem Heidchen 9, D-5068 Odenthal (DE)**
Erfinder: **Achtenberg, Theo, Im Bergischen Heim 6, D-5090 Leverkusen 3 (DE)**

(54) **RTV-Siliconpasten.**

(57) Die vorliegende Erfindung betrifft unter Ausschluß von Feuchtigkeit lagerfähige, bei Einfluß von Feuchtigkeit härtbare Polydiorganosiloxanmassen, die durch Vermischen von Polydiorganosiloxanen mit reaktiven Endgruppen, Silanen der allgemeinen Formel $RR^1Si(NR^2R^3)_2$, Silanen der allgemeinen Formel $RSi(O{-}N=R^4)_3$ und üblichen weiteren an sich bekannten Bestandteilen erhalten werden.

EP 0 138 103 A2

BAYER AKTIENGESELLSCHAFT 5090 Leverkusen, Bayerwerk

Konzernverwaltung RP
Patentabteilung Br/li-c

RTV-Siliconpasten

Die vorliegende Erfindung betrifft bei Raumtemperatur unter Zutritt von Wasser oder des Wasserdampfes der Luft vulkanisierende, einkomponentige Siliconpasten (1K RTV-Siliconpasten). Derartige Materialien sind an sich schon lange bekannt und bestehen in der Regel aus einem OH-gestoppten Polysiloxan, einem trimethylsiloxygestoppten Polysiloxan, Füllstoffen wie z.B. Kreide, Kieselsäuren usw., Vernetzersilanen, die mehr als zwei hydrolyseempfindliche Gruppen aufweisen, und gegebenenfalls Katalysatoren sowie weiteren Zusätzen zur Einstellung bestimmter Eigenschaften.

Um Elastomere mit guter Haftung an unterschiedlichen Fugenuntergründen bei hoher Dehnungsbelastung zu erzielen, wurden Materialien vorgeschlagen, die nach der Vulkanisation einen geringen Elastizitätsmodul zur Entlastung der Kontaktflächen bei gleichzeitiger hoher Bruchdehnung aufweisen. Erreicht wurde dies durch Einsatz difunktioneller Silane, sog. Kettenverlängerer.

So wurden Systeme auf Basis Hydroxylamin-Kettenverlängerer und -Vernetzer (US 3 341 486), Acetamid-Kettenverlängerer und -Vernetzer (US 3 766 127), Acetamid-Kettenverlängerer und Amin-Vernetzer (US 3 766 128), Amid-Kettenverlängerer und Hydroxylamin-Vernetzer (US 3 817 909) und Hydroxylamin-Kettenverlängerer mit unterschiedlichen trifunktionellen Vernetzersilanen (EP 0 036 262) entwickelt.

Eine andere Möglichkeit, bestehende Systeme in ihren Eigenschaften zu verbessern, ist der Einsatz von gemischtfunktionellen Vernetzersilanen oder Mischungen verschiedener Vernetzer. So wurden z.B. Systeme auf Basis eines triaminofunktionellen Vernetzersilanes durch Einsatz eines amino- und oximinofunktionellen Silanes oder einer Mischung von triaminofunktionellen und trioximfunktionellen Vernetzersilanen hinsichtlich Lagerstabilität und Haftung verbessert (DAS 1 941 285).

Die genannten Systeme weisen jedoch alle auch gewisse Nachteile auf. So gibt es in Hydroxylamin-Systemen Probleme mit der Lagerstabilität, im Falle der Diamidosilane muß man auf die relativ teuren entsprechenden Methylvinylsilane ausweichen und im Falle von EP 0 036 262 wurden ebenfalls relativ kostspielige Silane mit z.B. Vinyl- und Phenylgruppen beschrieben.

Es war daher Aufgabe der vorliegenden Erfindung, eine Paste zu entwickeln, die auf der Basis kostengünstiger, üblicher Silane nach der Vulkanisation Silicongummimaterialien mit hoher Bruchdehnung bei hohem Füllgrad und geringem Modul ergibt.

Überraschenderweise gelingt dies mit an sich bekannten Silanen (Kettenverlängerern und Vernetzern), indem man als difunktionelles Silan $RR^1Si(NR^2R^3)_2$ und trifunktionelles Silan $RSi(O-N=R^4)_3$ in geeigneter Weise zum Einsatz bringt, wobei die bei der Herstellung mitentstandenen partiellen Hydrolyseprodukte der beiden Silane entsprechend wirksam sind.

Gegenstand der vorliegenden Erfindung sind daher unter Ausschluß von Feuchtigkeit lagerfähige, bei Umgebungstemperatur unter Einfluß von Wasser bzw. Feuchtigkeit zu Elastomeren härtbare Polydiorganosiloxanmassen, erhältlich durch Vermischen von Polydiorganosiloxanen mit reaktiven Endgruppen, Diorganosilanen mit hydrolyselabilen Si-N-Gruppen der allgemeinen Formel

$$RR^1Si(NR^2R^3)_2$$

wobei R, $R^1$, $R^2$, $R^3$ Alkyl-, Aryl-, Aralkyl- und Vinylgruppen bzw. $R^2$ und $R^3$ gemeinsam ein Alkandiylrest mit bis zu 8 C-Atomen oder Wasserstoff sein können (R, $R^1$ sind bevorzugt Methylgruppen, $R^2$ und $R^3$ Alkyl- bzw. Cycloalkylgruppen und/oder Wasserstoff),

Alkylsilanen der allgemeinen Formel

$$RSi\ (O-N=R^4)_3$$

wobei $R^4$ eine $R^2R^3C$-Gruppe mit bevorzugt bis zu 8 C-Atomen ist und $R^2$ und $R^3$ die dafür angegebene Bedeutung haben, verdickend wirkenden Füllstoffen, Kondensationskatalysatoren und anderen bekannten Hilfsstoffen.

0138103

Die Erfindung bezieht sich auf Pasten, die durch Vermischen von 100 Gew.-Teilen α, ω-Dihydroxypolydiorganosiloxan der Viskosität 100 bis 500 000 mPa.s bei 25°C, 0-100 Gewichtsteilen α, ω-Bis-(trialkylsiloxy)-diorganopolysiloxan der Viskosität 100 mPa.s bis 10000 mPa.s bei 25°C, 3-15 Gewichtsteilen Diorganodiaminosilan, 6-30 Gewichtsteilen Organotrioximsilan und bis zu 400 Gewichtsteilen eines gegebenenfalls verdickend wirkenden Füllstoffes und eines Katalysators erhalten werden.

Als α, ω-Dihydroxypolydiorganosiloxane werden der leichten Zugänglichkeit wegen bevorzugt Polydimethylsiloxane verwendet. Statt der methylgruppenhaltigen Polymere können auch solche verwendet werden, bei denen zumindest ein Teil der Methylgruppen durch Vinyl-, Phenyl-, längerkettige Alkyl- oder Haloalkylgruppen ersetzt ist. Diese Polymere sollen im wesentlichen linear sein, geringe Anteile an verzweigend wirkenden Organosiloxyeinheiten können jedoch anwesend sein. Ebenso können auch Mischungen von Polymeren unterschiedlicher Viskosität oder auch (Block)copolymere der Organopolysiloxane eingesetzt werden.

Die Hydroxylgruppen der Polymere können durch andere hydrolytisch abspaltbare Endgruppen ersetzt worden sein wie z.B. durch Amino- oder Oximgruppen.

Die Viskosität des Polymers liegt bevorzugt zwischen

5.000 mPa.s um gute mechanische Eigenschaften zu erreichen und 100 000 mPa.s um eine gute Handhabung des sonst zu zähflüssigen Materials zu gewährleisten. Der zweite aufgeführte Bestandteil der erfindungsgemäßen Pasten ist ein durch Trialkylsiloxygruppenendgestopptes Polydiorganosiloxan, dessen Organogruppen normalerweise Methylgruppen aber auch zumindest zum Teil Vinyl- oder Phenylgruppen sein können. Auch in diesem Polymer dürfen statt der Diorganosiloxygruppen Anteile an verzweigend wirkenden Gruppen vorhanden sein.

Als difunktionelles, hydrolytisch labiles Silan wird bevorzugt ein Dimethyldiaminosilan verwendet, bei dem das Amin ein primäres oder sekundäres Amin mit Alkyl und/oder Aryl- bzw. Aralkylgruppen sein kann. Vorzugsweise wählt man jedoch Cyclohexylamin oder Butylamin. Von Vorteil können auch die entsprechenden Methylethyl- oder Methylpropylsilane sein.

Die Menge des difunktionellen Silans, die der Pastenmischung zugesetzt wird, und die Art und Weise des Mischens der Komponenten bestimmen die Eigenschaften des Vulkanisates, wie es in den Beispielen deutlich wird.

Vernetzend wirken in diesen Pasten Oximsilane des Typs

$$RSi(O-N=R^4)_3 \quad ,$$

wobei $R^4$ eine $R^2R^3$-C-Gruppe mit bevorzugt bis zu 8 C-Atomen ist und $R^2$ und $R^3$ die oben angegebene Bedeutung besitzen. Besonders bevorzugt ist die Verwendung von Methyl-tris-(2-butanoxim)-silan. Bezüglich des Einflusses auf die Eigenschaften gilt das bereits beim Kettenverlängerer ausgeführte.

Wesentlich ist weiterhin die Verwendung mindestens eines Füllstoffes, der, wie normalerweise gewünscht, eine standfeste Paste beim Einmischen ergibt. Diese Standfestigkeit ist beim Verwenden der Paste als Fugendichtungsmaterial in senkrechten oder waagerechten, nach unten offenen Fugen unabdingbar, um ein Herausfließen der Paste vor der Vulkanisation zu verhindern. Im Rahmen der erfindungsgemäßen Pasten wird dazu im wesentlichen handelsübliche, gegebenenfalls oberflächenbehandelte Kreide oder Dolomit mit einer durchschnittlichen Korngröße von weniger als 3 µm eingesetzt. Die gleichzeitige Verwendung anderer Füllstoffe ist dadurch nicht ausgeschlossen.

Des weiteren ist es in den erfindungsgemäßen Pasten möglich, Kondensationskatalysatoren zu verwenden, wie sie üblicherweise in 1K RTV-Siliconpasten beschrieben sind, wie Metallsalze organischer Säuren, z.B. Dibutylzinndiacetat oder -laurat oder Titanester. Diese Kondensationskatalysatoren werden in Mengen von 0,01 bis 1 Gewichtsprozent in die Paste eingearbeitet.

Zusätzlich können auch organische Lösemittel, Oligomere oder Polymere, gegebenenfalls in Gegenwart eines geeigneten Dispergartors, zugemischt werden. Dazu zählen z. B. Paraffine, Polyether, Polyester, Polyamide, Polyacrylate oder die Polymerisationsprodukte von Olefinen oder Acetylenen.

Der Gegenstand der vorliegenden Erfindung soll anhand der folgenden Beispiele noch näher erläutert werden.

In den Beispielen beziehen sich die Viskositätsangaben auf 25°C, die verwendeten Mengen sind Gew.-Teile bzw. Gew.-%, die Shore A-Werte werden nach DIN 53 505, Modul, Zugfestigkeit und Bruchdehnung nach DIN 53 504 bestimmt. Die verwendete handelsübliche Kreide hat eine Teilchengröße von durchschnittlich kleiner als 1 µm, der Dolomit eine Teilchengröße kleiner 3 µm. Die Herstellung der Pasten erfolgt unter im wesentlichen wasserfreien Bedingungen in Vakuum-Planetenmischern, kann jedoch auch in anderen üblicherweise verwendeten Maschinen vorgenommen werden.

Beispiel 1

30 Teile $\alpha,\omega$-Dihydroxypolydimethylsiloxan der Viskosität 50 000 mPa.s und 12 Teile $\alpha,\omega$-Bis-(trimethylsiloxy)-polydimethylsiloxan der Viskosität 1000 mPa.s werden mit 2,5 Teilen Dimethylbis-(cyclohexylamino)-silan im Vakuum 10 Minuten gerührt. Anschließend werden 45 Teile gefällter und mit Stearinsäure behandelter Kreide 15 Minuten intensiv eingemischt und danach 8 Teile $\alpha,\omega$-Bis-(trimethylsiloxy)-polydimethylsiloxan, der Viskosität 1.000 mPa.s, 6 Teile Methyltris-(2-butanonoxim)silan und 0,3 Teile Dibutylzinndilaurat zugegeben. Nach ca. 45 Minuten Rührzeit wird eine homogene Paste erhalten. Nach der Vulkanisation erhält man folgende Werte:

| | |
|---|---|
| Shore A-Härte | 6 |
| E-Modul 100 % | 0,12 [MPa] |
| Zugfestigkeit | 0,64 [MPa] |
| Bruchdehnung | 770 [%] |

Beispiel 2

Gemäß Beispiel 1 stellt man analog eine Paste mit nur 2 Teilen Dimethyl-bis-(cyclohexylamino)-silan her. Die Paste vulkanisiert unter Einfluß von Feuchtigkeit der Luft zu einem Silicongummi mit den mechanischen Eigenschaften:

| | |
|---|---|
| Shore A-Härte | 7 |
| E-Modul 100 % | 0,13 [MPa] |
| Zugfestigkeit | 0,63 [MPa] |
| Bruchdehnung | 720 [%] |

Beispiel 3

30 Teile α, ω-Dihydroxypolydimethylsiloxan der Viskosität 50 000 mPa.s und 20 Teile α, ω -Bis-(trimethylsiloxy)-polydimethylsiloxan der Viskosität 1000 mPa.s werden mit 2,5 Teilen Dimethylbis-(cyclohexylamino)-silan im Vakuum 10 Minuten gerührt. Anschließend werden 45 Teile gefällter und mit Stearinsäure behandelter Kreide 15 Minuten intensiv eingemischt und danach 6 Teile Methyltris-(2-butanonoxim)-silan und 0,1 Teile Dibutylzinndilaurat zugegeben. Nach ca. 45 Minuten Rührzeit wird eine homogene Paste erhalten. Nach der Vernetzung werden folgende Werte gemessen:

| | |
|---|---|
| Shore A-Härte | 9 |
| E-Modul 100 % | 0,13 [MPa] |
| Zugfestigkeit | 0,79 [MPa] |
| Bruchdehnung | 950 [%] |

Beispiel 4

30 Teile α, ω-Dihydroxypolydimethylsiloxan der Viskosität 50 000 mPa.s und 12 Teile α, ω -Bis-(trimethylsiloxy)-polydimethylsiloxan der Viskosität 1000 mPa.s werden mit 2,0 Teilen Dimethylbis-(i-butylamino)-silan im Vakuum 10 Minuten gerührt. Anschließend werden 45 Teile gefüllter und mit Stearinsäure behandelter Kreide 45 Minuten intensiv eingemischt und danach 8 Teile

α, ω-Bis-(trimethylsiloxy)-polydimethylsiloxan der Viskosität 1000 mPa.s, 4,5 Teile Methyltris-(2-butanonoxim) silan und 0,1 Teile Dibutylzinndilaurat zugegeben. Nach ca. 45 Minuten Rührzeit wird eine homogene Paste erhalten; an einem entsprechenden Probekörper werden nach der Vernetzung die mechanischen Werte gemessen:

| | |
|---|---|
| Shore A-Härte | 7 |
| E-Modul 100 % | 0,09 [MPa] |
| Zugfestigkeit | 0,81 [MPa] |
| Bruchdehnung | 1030 [%] |

Beispiel 5

19,2 Teile α,ω-Dihydroxypolydimethylsiloxan der Viskosität 50 000 mPa.s und 12,8 Teile α,ω-Bis-(trimethylsiloxy)-polydimethylsiloxan der Viskosität 1 000 mPa.s werden vorgelegt. Nun werden 63,5 Teile eines gemahlenen Dolomits (mittlerer Korndurchmesser 2,0 µm) eingearbeitet. Danach werden 1,3 Teile Dimethyldicyclohexylaminosilan zugegeben und unter Vakuum ca. 15 Minuten gut vermischt. Dann werden 2,9 Teile Methyl-tris-(2-butanonoxim)-silan sowie 0,06 Teile Dibutylzinndiacetat zugesetzt und 10 Minuten unter Vakuum gerührt. Die Paste vulkanisiert an der Luft zu einem Gummi, welcher nach 7 Tagen folgende Eigenschaften aufweist:

| | |
|---|---|
| Shore A-Härte | 20 |
| E-Modul 100 % | 0,34 [MPa] |
| Zugfestigkeit | 0,68 [MPa] |
| Bruchdehnung | 500 [%] |

Beispiel 6

Man wiederholt Beispiel 5 mit dem Unterschied, daß man gemahlenen Dolomit mit einem mittleren Korndurchmesser von 1,8 µm einsetzt.

| | |
|---|---|
| Shore A-Härte | 16 |
| E-Modul 100 % | 0,28 [MPa] |
| Zugfestigkeit | 0,68 [MPa] |
| Bruchdehnung | 500 [%] |

Patentansprüche

1. Unter Ausschluß von Feuchtigkeit lagerfähige, bei Umgebungstemperatur unter Einfluß von Wasser bzw. Feuchtigkeit zu Elastomeren härtbare Polydiorganosiloxanmassen, erhältlich durch Vermischen von Polydiorganosiloxanen mit reaktiven Endgruppen, Diorganosilanen mit hydrolyselabilen Si-N-Gruppen der allgemeinen Formel

$$RR^1Si(NR^2R^3)_2$$

wobei R, $R^1$, $R^2$, $R^3$ Alkyl-, Aryl-, Aralkyl- und Vinylgruppen bzw. $R^2$ und $R^3$ gemeinsam ein Alkandiylrest mit bis zu 8 C-Atomen oder Wasserstoff sein können,

Organosilanen der allgemeinen Formel

$$RSi\ (O\text{-}N{=}R^4)_3$$

wobei $R^4$ eine $R^2R^3C$-Gruppe mit bis zu 8 C-Atomen bedeutet,

verdickend wirkenden Füllstoffen, Kondensationskatalysatoren und anderen bekannten Hilfsstoffen.

2. Polydiorganosiloxanmassen nach Anspruch 1, dadurch gekennzeichnet, daß 100 Gew.-Teile $\alpha, \omega$ -Dihydroxy-

polydimethylsiloxan, der Viskosität 100 bis 500 000 mPa.s, 3-15 Gew.-Teile eines Dimethyldiaminosilans, 6-30 Gew.-Teile eines Methyltrioximsilans, bis zu 400 Gew.-Teile eines Füllstoffes und 0,01-5,0 Gew.-Teile eines Kondensationskatalysators sowie gegebenenfalls bis zu 100 Gew.-Teile $\alpha,\omega$-Bis-(trimethylsiloxy)-polydimethylsiloxan der Viskosität 100 bis 10 000 mPa.s vermischt werden.

3. Polydiorganosiloxanmassen nach den Ansprüchen 1 oder 2, dadurch gekennzeichnet, daß als difunktionelle Silan Dimethylbis-(cyclohexylamino)-silan oder Dimethyl-bis-(butylamino)-silan eingesetzt werden.

4. Polydiorganosiloxanmassen nach den Ansprüchen 1 bis 3, dadurch gekennzeichnet, daß als Vernetzer Methyltris-(2-butanonoxim)-silan eingesetzt wird.